# EUROPEAN PATENT SPECIFICATION

(11) **EP 2 634 841 B1**
(45) Date of publication and mention of the grant of the patent: **14.12.2016**
(21) Application number: 13156816.4
(22) Date of filing: 26.02.2013
(51) Int. Cl.: H01M 2/16, H01M 10/052

(54) **Separator including coating layer of inorganic and organic mixture, and battery including the same**
Separator mit Beschichtungsschicht einer anorganischen und organischen Mischung, und Batterie damit
Séparateur comprenant une couche de revêtement de mélange inorganiques et organiques et batterie comprenant celui-ci

(30) Priority: 29.02.2012 KR 20120021139
(43) Date of publication of application: 04.09.2013
(73) Proprietor: Cheil Industries Inc., Gumi-si Gyeongsangbuk-do 730-030 (KR)
(72) Inventor: HONG, Ki Chul, Gyeonggi-do, 437-711 (KR); PARK, Myung Kook, 437-711 Uiwang-si, Gyeonggi-do (KR); DOH, Jae Goo, 437-711 Uiwang-si, Gyeonggi-do (KR); CHUNG, Jun Ho, 437-711 Uiwang-si, Gyeonggi-do (KR)
(74) Representative: Michalski, Stefan

(56) References cited:
- EP-A2- 1 011 157
- EP-A2- 2 378 595
- US-A1- 2002 192 561

## Description

### Field of the Invention

The present invention relates to a separator including a coating layer of an organic and inorganic mixture, and a battery including the same.

### Description of the Related Art

A separator for an electrochemical battery refers to a middle layer disposed inside a battery to isolate a positive electrode and a negative electrode from each other while maintaining ionic conductivity to permit charge and discharge of the battery.

Recently, electrochemical batteries have been developed to have a lighter and thinner structure to improve portability of electronic devices such as mobile devices and notebook computers while ensuring high output and high capacity for use in electric cars and the like. Consequently, it is necessary for a separator for batteries to have a slim thickness and a light weight while ensuring high adhesion and shape stability based on high heat resistance in order to produce high capacity batteries.

Accordingly, various studies have also been made to produce a separator having improved stability by coating an organic and inorganic mixture on a porous base film.

US 2002/192561 A1 refers to a porous separator for a winding-type lithium secondary battery having a gel-type polymer electrolyte includes a matrix made of polyvinyl chloride, or a matrix made of mixtures of polyvinylchloride and at least one polymer selected from the group consisting of polyvinylidenefluoride, a vinylidenefluoride/hexafluoropropylene copolymer, polymethacrylate, polyacrylonitrile and polyethyleneoxide.

EP 1 011 157 A2 refer to separator materials for secondary lithium batteries comprising as the base material a vinylidene fluoride-hexafluoropropylene (VdF-HFP) copolymer resin, wherein polymer particles having a higher softening point than the copolymer are blended and dispersed in the separator. As the polymer particles, fluorinated polymer particles are preferable. The separator materials for secondary lithium batteries are free from short-circuiting during the step of the heat lamination of the separator on electrode membranes.

EP 2 378 595 A2 refers to a secondary battery including an electrode assembly. The electrode assembly includes a positive electrode, a negative electrode, and a separator. The positive electrode includes a positive electrode non-coating portion that is not coated with an active material in a portion of a positive electrode collector. The negative electrode includes a negative electrode non-coating portion that is not coated with an active material in a portion of a negative electrode collector. The non-coating portions are disposed in at least one of upper and lower portions of the electrode assembly in a longitudinal direction of the electrodes. A positive electrode tab and a negative electrode tab are connected to the non-coating portions. The separator is a complex porous separator including a substrate coated with a binder polymer or an organic/inorganic mixture formed of a binder polymer and inorganic particles.

For example, Korean Patent No. 10-0877161 discloses a method for producing a separator for rechargeable batteries with improved thermal stability by coating a polyolefin film with a polyvinylidene fluoride-hexafluoropropylene copolymer as an organic polymer together with inorganic additives, and a separator prepared from the method.

Although this method can provide improved thermal stability by coating inorganic particles on a separator, the single use of the polyvinylidene fluoride-hexafluoropropylene copolymer as an organic polymer to form a coating layer makes it difficult to achieve other effects in addition to smooth coating of the inorganic additives.

Namely, with increasing capacity of batteries, it becomes difficult for conventional techniques to ensure desired adhesion between electrodes and a separator, and there is an increasing likelihood of deteriorating adhesion to the electrodes due to inorganic particles on the surface of the separator.

Therefore, there is a need for a separator for batteries having high heat resistance and high shape stability while ensuring good adhesion to electrodes.

### Summary of the Invention

In order to solve such problems of the related art, the present inventor developed a porous separator for batteries which includes a coating layer of an organic and inorganic mixture and exhibits high heat resistance and good adhesion to electrodes.

It is an aspect of the present invention to provide a porous separator for batteries, which includes a coating layer of an organic and inorganic mixture containing a polyvinylidene fluoride homopolymer and a polyvinylidene fluoride-hexafluoropropylene copolymer, as organic binders, and inorganic particles to exhibit good properties in terms of adhesion and thermal stability, to prevent short circuit between positive and negative electrodes, and to improve stability of an electrochemical battery including the separator.

It is another aspect of the present invention to provide an electrochemical battery including the separator between a positive electrode and a negative electrode to provide a lighter and thinner structure while providing high capacity.

In accordance with claim 1, the present invention provides a porous separator which includes a porous base film and a coating layer of an organic and inorganic mixture formed on a surface of the porous base film and containing a polyvinylidene fluoride homopolymer, a polyvinylidene fluoride-hexafluoropropylene copolymer and inorganic particles. Here, the separator has,
a) a thermal shrinkage of 30% or less in a machine direction (MD) or in a transverse direction (TD) as measured after leaving the separator at 150°C for 1 hour,
b) a peel strength of 50 gf/cm² or more between the coating layer and the base film, and
c) an adhesive strength of 20 gf/cm² or more between the coating layer and electrodes of a battery.

In accordance with another aspect, the present invention provides an electrochemical battery which includes one of the aforementioned separators, a positive electrode, a negative electrode, and an electrolyte.

The electrochemical battery may be a lithium rechargeable battery.

According to the present invention, the separator includes a coating layer of an organic and inorganic mixture, which contains a polyvinylidene fluoride homopolymer, a polyvinylidene fluoride-hexafluoropropylene copolymer, and inorganic particles, on a porous base film, thereby providing good adhesion and good thermal stability.

Further, the present invention provides a separator, which includes the coating layer of the organic and inorganic mixture and exhibits good properties in terms of thermal resistance, shape stability and adhesion to electrodes, thereby facilitating fabrication of a thin and/or high output high capacity electrochemical battery. The present invention also provides a battery which is manufactured using the separator and has improved stability, thereby ensuring long term use of the battery.

### Detailed description of the Invention

Hereinafter, embodiments of the present invention will be described in more detail. Descriptions of details apparent to those skilled in the art will be omitted herein.

One aspect of the present invention provides a porous separator which includes a porous base film and a coating layer of an organic and inorganic mixture formed on a surface of the porous base film and containing a polyvinylidene fluoride homopolymer, a polyvinylidene fluoride-hexafluoropropylene copolymer and inorganic particles. Here, the separator has,
a) a thermal shrinkage of 30% or less in a machine direction (MD) or in a transverse direction (TD) as measured after leaving the separator at 150°C for 1 hour,
b) a peel strength of 50 gf/cm² or more between the coating layer and the base film, and
c) an adhesive strength of 20 gf/cm² or more between the coating layer and electrodes of a battery.

Definition: Molecular weight is a measure of the sum of the atomic weights of the atoms in a molecule.

Definition: Particle size is measured according to

According to the present invention, the polyvinylidene fluoride (PVdF) homopolymer preferably has a weight average molecular weight of 1,000,000 g/mol or more, more preferably 1,000,000 g/mol to 1,200,000 g/mol.

Within this molecular weight range, the polyvinylidene fluoride (PVdF) homopolymer can improve adhesive strength between the coating layer and the base film to reduce thermal shrinkage and provide good adhesive strength between the coating layer and electrodes to achieve efficient suppression of short circuit between electrodes.

Also, within this molecular weight range, the polyvinylidene fluoride homopolymer can be smoothly dissolved in DMF, and thus can prevent an excess use of DMF and possible defects during a dry process.

According to the present invention, the polyvinylidene fluoride-hexafluoropropylene (PVdF-HFP) copolymer preferably has a weight average molecular weight of 800,000 g/mol or less, more preferably 600,000 g/mol to 800,000 g/mol.

Within this molecular weight range, the polyvinylidene fluoride-hexafluoropropylene copolymer can provide sufficiently strong adhesion between the coating layer and the base film while securing excellent electrolyte impregnation.

In the polyvinylidene fluoride-hexafluoropropylene copolymer used in the present invention, although the content of each of polyvinylidene fluoride and hexafluoropropylene is not particularly limited, hexafluoropropylene may be present in an amount of 0.1 to 40 % by weight based on the total weight of the copolymer.

According to the present invention, the inorganic particles may be selected from the group consisting of Al₂O₃, SiO₂, B₂O₃, Ga₂O₃, TiO₂ and SnO₂, without being limited thereto. These may be used alone or in combination of two or more thereof.

Preferably, the inorganic particles are Al₂O₃ particles.

Although not particularly limited to a certain average particle size, the inorganic particles preferably have an average particle size from 1 nm to 2,000 nm, more preferably from 100 nm to 1,000 nm. Within this size range, the inorganic particles can prevent deterioration in coating processibility and dispersion within a coating composition, deterioration in mechanical properties, and increase in electric resistance by allowing suitable adjustment of the coating layer. Further, pores of a suitable size can be created in the coating layer, thereby lowering the likelihood of internal short circuit upon charge and discharge of the battery.

Although not particularly limited to a certain ratio in a coating composition of the organic and inorganic mixture, the coating composition may contain: 5 to 10 parts by weight of the polyvinylidene fluoride homopolymer; 5 to 20 parts by weight of the polyvinylidene fluoride-hexafluoropropylene copolymer; and 70 to 90 parts by weight of the inorganic particles, based on 100 parts by weight of the coating layer in terms of solid content.

Within this range, the inorganic particles can provide thermal stability, that is, heat resistance and heat dissipation, and the coating layer can be formed in a relatively flat shape by preventing deterioration in coating processibility and dispersion of the coating composition.

According to the present invention, the coating composition of the organic and inorganic mixture contains the polyvinylidene fluoride homopolymer and the polyvinylidene fluoride-hexafluoropropylene copolymer as organic binder polymer resins, and the inorganic particles. The coating composition may further contain suitable solvents and other additives.

In preparation of the coating composition used in the present invention, the polyvinylidene fluoride homopolymer, the polyvinylidene fluoride-hexafluoropropylene copolymer, and the inorganic particles may be dissolved in suitable solvents, respectively, and mixed with each other.

For example, the polyvinylidene fluoride homopolymer may be prepared as a polymer solution, which is obtained by dissolving the polyvinylidene fluoride homopolymer in dimethylformamide (DMF). The polyvinylidene fluoride-hexafluoropropylene copolymer may be prepared as a polymer solution, which is obtained by dissolving the polyvinylidene fluoride-hexafluoropropylene copolymer in acetone, and the inorganic particles may be prepared as an inorganic dispersant, which is obtained by dissolving the inorganic particles in acetone.

According to the present invention, the polyvinylidene fluoride homopolymer may have a weight average molecular weight of 1,000,000 g/mol or more. Thus, since this polyvinylidene fluoride homopolymer is unlikely to be dissolved in a low boiling point solvent, such as acetone, it is desirable that the polyvinylidene fluoride homopolymer be dissolved in a solvent such as DMF in practical use.

Although a solvent, such as DMF and the like, which has a relatively high boiling point, can be insufficiently dried upon drying after coating, it is possible to prevent an excess of the solvent from remaining on the surface of the separator through suitable adjustment of drying conditions.

The polymer solutions and the inorganic dispersant may be mixed in a suitable solvent to prepare a coating composition.

Examples of solvents used in the present invention may include ketones such as acetone, or alcohols such as methanol, ethanol, isopropyl alcohol, and the like, without being limited thereto. These solvents provide an advantage of allowing easy removal upon drying after coating.

According to the present invention, the coating composition may be prepared in the form of a mixture obtained by sufficiently stirring the polymer solutions, the inorganic dispersant and the solvent using a ball mill, a bead mill or a screw mixer.

The porous separator of the present invention may be prepared by coating the coating composition on one or both sides of the base film, followed by drying the coating composition.

Any typical coating method known in the art may be used without limitation to coat the base film with the coating composition. For example, dip coating, die coating, roll coating, or comma coating may be used. These coating processes may be used alone or in combination thereof.

After coating the coating composition on the base film, drying is performed. Here, any typical drying process known in the art may be used without limitation.

For example, drying may be carried out by hot-air blowing.

Drying of the coating layer may be performed at a temperature ranging from 70°C to 120°C. Within this temperature range, drying of the coating layer can be completed within a suitable time. In other words, this temperature range provides an advantage of forming a relatively smooth coating layer by preventing surface irregularity resulting from rapid drying without requiring a long drying time

The coating layer of the organic and inorganic mixture preferably has a thickness of 0.01 *µ*m to 20 *µ*m, more preferably 1 *µ*m to 15 *µ*m. Within this thickness range, the coating layer can provide excellent thermal stability and adhesive strength, and can suppress increase in internal resistance of the battery by preventing excessive increase in thickness of the separator.

According to the present invention, the porous base film may be a polyolefin base film. The polyolefin base film may be selected from the group consisting of a polyethylene monolayer film, a polypropylene monolayer film, a polyethylene/polypropylene bilayer film, a polypropylene/polyethylene/polypropylene triple-layer film, and a polyethylene/polypropylene/polyethylene triple-layer film.

The base film preferably has a thickness of 1 *µ*m to 40 *µ*m, more preferably 1 *µ*m to 25 *µ*m. Within this thickness range of the base film, the separator can be formed to a suitable thickness, thereby preventing short circuit of the positive electrode and the negative electrode while improving stability of the battery. If the thickness of the separator exceeds this range, there is a problem of increase in internal resistance of the battery.

The porous separator comprising the coating layer of the organic and inorganic mixture may have a thermal shrinkage of 30% or less in a machine direction (MD) or in a transverse direction (TD), as measured after leaving the separator at 150°C for 1 hour. Within this range, the coating layer of the separator has good peeling resistance, and a battery including the separator has improved stability.

Here, any typical method known in the art may be used without limitation to measure the thermal shrinkage of the separator.

For example, the thermal shrinkage of the separator can be measured as follows: a prepared separator is cut into a size of about 5 cm × about 5 cm and left in a chamber at 150°C for 1 hour, followed by measuring degrees of shrinkage in MD and TD directions to calculate thermal shrinkage.

In the porous separator including the coating layer of the organic and inorganic mixture, peel strength between the coating layer and the base film may be 50 gf/cm² or more. Within this range, the coating layer has good peeling resistance, and it is possible to prevent separation of the inorganic particles from the coating layer in a process of assembling the battery using the separator. Further, within this range, the separator exhibits sufficiently strong adhesion between the coating layer and the base film to prevent shrinkage the base film due to heat and separation between the coating layer and the base film due to overheating of the battery, thereby preventing short circuit of the electrodes while improving thermal stability.

Here, any typical method known in the art may be used without limitation to measure the peel strength of the coating layer.

For example, the peel strength of the coating layer can be measured as follows: a prepared coating layer is cut into a 1.5 cm × 7 cm specimen, which in turns is strongly attached to a glass plate using a transparent double-sided tape (3M), followed by measuring force required to separate the coating layer using a tensile strength tester (UTM; Universal Test Machine).

When the porous separator including the coating layer of the organic and inorganic mixture according to the present invention is applied to an electrochemical battery, the coating layer may exhibit an adhesive strength of 20 gf/cm² or more to electrodes of the battery. Within this range, the coating layer and the electrodes can be sufficiently strongly attached together to suppress thermal shrinkage of the separator, thereby preventing short circuit in the positive and negative electrodes. In addition, in production of high output large capacity batteries, the separator improves stability and lifespan of the batteries.

Here, any typical method known in the art may be used to measure adhesive strength between the coating layer and the electrodes.

For example, the adhesive strength between the coating layer and the electrodes can be measured as follows: a prepared separator of the present invention is placed between both electrodes to prepare a battery stack of positive electrode/separator/negative electrode, which in turn is inserted into an aluminum pouch. Then, with an electrolyte injected into the aluminum pouch, the aluminum pouch is sealed and formed into a single-plate cell, which in turn is subjected to a force of 100 kg/cm² for 20 seconds at 50°C and left for 12 hours. Next, after disassembling each of the single-plate cells, the battery stack of the positive electrode, the separator and the negative electrode bonded to each other is cut into a size of 1.5 cm (MD) × 7 cm (TD) and attached to a glass plate using a transparent double-sided tape (3M), followed by measuring adhesive strength between the electrodes and the separator using a tensile strength tester (UTM; Universal Test Machine).

In accordance with another aspect, the present invention provides an electrochemical battery, which includes the porous separator including the coating layer of the organic and inorganic mixture, a positive electrode, and a negative electrode, and which is filled with an electrolyte.

Any type of battery known in the art may be used without limitation.

Examples of the electrochemical battery of the present invention may include lithium rechargeable batteries, such as lithium metal rechargeable batteries, lithium ion rechargeable batteries, lithium polymer rechargeable batteries, lithium ion polymer rechargeable batteries, and the like.

Any typical method known in the art can be used without limitation in manufacture of the electrochemical battery according to the present invention.

For example, the electrochemical battery according to the present invention may be manufactured by placing the polyolefin separator including the coating layer of the organic and inorganic mixture according to the present invention between a positive electrode and a negative electrode, and filling a space therebetween with an electrolyte.

The electrodes of the electrochemical battery according to the present invention may be prepared in the form of assemblies of electrode active materials and current collectors, which are combined by a typical method used in the art.

As the positive active material of the battery according to the present invention, any positive electrode active material known in the art may be used without limitation. Specifically, the positive electrode includes a positive electrode active material, which allows reversible intercalation and deintercalation of lithium ions. Examples of such positive electrode active materials may include composite metal oxides of lithium and at least one metal selected from cobalt, manganese and nickel, without being limited thereto. The amount of lithium dissolved between metal elements may be determined in various ways. In addition to these metals, the positive electrode active material may further include an element selected from the group consisting of Mg, A1, Co, Ni, K, Na, Ca, Si, Ti, Sn, V, Ge, Ga, B, As, Zr, Mn, Cr, Fe, Sr, V, and rare earth metal elements. Preferably, the positive electrode is a composite metal oxide of lithium and a metal selected from the group consisting of Co, Ni, Mn, A1, Si, Ti and Fe, more preferably lithium cobalt oxide (LCO, for example, LiCoO₂) lithium nickel cobalt manganese oxide (NCM, for example, Li[Ni(x)Co(y)Mn(z)]O₂), lithium manganese oxide (LMO, for example, LiMn₂O₄, LiMnO₂), lithium iron phosphate (LFP, for example, LiFePO₄), lithium nickel oxide (LNO, for example, LiNiO₂), and the like.

The negative electrode includes a negative electrode active material, which allows reversible intercalation and deintercalation of lithium ions. Examples of such negative electrode active materials include crystalline or amorphous carbon, or carbonous negative electrode active materials of carbon composites (thermally decomposed carbon, coke, graphite), combusted organic polymer compounds, carbon fibers, tin oxide compounds, lithium metals, or alloys of lithium and other elements. Examples of amorphous carbon may include hard carbon, coke, mesocarbon microbead (MCMB) baked at 1500°C, mesophase pitch-based carbon fiber (MPCF) baked at 1500°C, and the like. Examples of crystalline carbon may include graphite materials, specifically natural graphite, graphitized coke, graphitized MCMB, graphitized MPCF, and the like. The negative electrode is preferably a crystalline or amorphous carbon electrode.

The positive electrode or negative electrode may be produced by dispersing an electrode active material, a binder, a conductive material, and, if needed, a thickener in a solvent to produce an electrode slurry composition, followed by depositing the slurry composition on an electrode current collector. The positive electrode current collector may be made of aluminum, aluminum alloys, and the like. The negative electrode current collector may be made of copper, copper alloys, and the like. The positive electrode current collector and negative electrode current collector may be prepared in the form of a foil or mesh.

As the current collector of the battery according to the present invention, any typical current collector known in the art may be used without limitation.

Examples of the positive electrode current collector may include aluminum foils, nickel foils, and combinations thereof, without being limited thereto.

Examples of the negative electrode current collector may include copper foils, gold foils, nickel foils, copper alloy foils, and combinations thereof, without being limited thereto.

As the electrolyte of the battery according to the present invention, any typical electrolyte for electrochemical batteries known in the art may be used without limitation.

The electrolyte may be obtained through dissolution or dissociation of a salt having, for example, a structure of A⁺ B⁻ in an organic solvent.

Examples of the A⁺ component, that is, cation, may include alkali metal cations such as Li⁺, Na⁺ or K⁺, and combinations thereof, without being limited thereto.

Examples of the B⁻ component, that is, anion, may include PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻, and combinations thereof, without being limited thereto.

Examples of the organic solvent may include propylene carbonate (PC), ethylene carbonate (EC), diethylcarbonate (DEC), dimethylcarbonate (DMC), dipropylcarbonate (DPC), dimethylsulfoxide, acetonitrile, dimethoxyethane, diethoxyethane, tetrahydrofuran, N-methyl-2-pyrrolidone (NMP), ethylmethylcarbonate (EMC), and γ-butyrolactone, and the like. These may be used alone or in combination thereof.

Next, the present invention will be described in more detail with reference to some examples. However, it should be understood that the following examples are provided for illustration only and are not to be construed in any way as limiting the present invention.

### Examples 1 to 5 and Comparative Examples 1 to 4

### Preparation of polyolefin porous separator including coating layer of organic and inorganic mixture

### Example 1

### (1) Preparation of coating composition

1) A polyvinylidene fluoride-hexafluoropropylene ('PVdF-HFP') copolymer (Solvay) having a weight average molecular weight of 700,000 g/mol was added in an amount of 10 wt% to acetone (Daejung Chemicals & Metals), followed by stirring at 25°C for 4 hours using a stirrer to prepare a first polymer solution
2) A polyvinylidene fluoride ('PVdF') homopolymer (Sovay) having a weight average molecular weight of 1,100,000 g/mol was added in an amount of 10 wt% to DMF (Daejung Chemicals & Metals), followed by stirring at 25°C for 4 hours using a stirrer to prepare a second polymer solution.
3) Alumina particles (Nippon Light Metal Company, Ltd.) were added in an amount of 25 wt% to acetone (Daejung Chemicals & Metals), followed by milling for dispersion at 25°C for 3 hours using a ball mill to prepare an inorganic dispersant.

The prepared first polymer solution, second polymer solution and inorganic dispersant were mixed in a ratio of first polymer solution : second polymer solution : inorganic dispersant : solvent (acetone) of 1:1:3:6, and stirred at 25°C for 2 hours using a power mixer to prepare a coating composition.

### (2) Preparation of separator

The prepared coating composition was deposited on both sides of a 16 *µ*m thick polyethylene monolayer base film by dip coating and dried to prepare a separator, which had a coating composition loading amount of 12 g/m² and a 8 *µ*m thick coating layer. The term of "a coating composition loading amount" means a weight per unit area of the coating layer.

### Example 2

A separator was prepared in the same manner as in Example 1 except that the coating composition was prepared by mixing the first polymer solution, the second polymer solution, the inorganic dispersion and solvent (acetone) in a ratio of 0.7:0.3:3:6 in (1) of Example 1.

### Example 3

A separator was prepared in the same manner as in Example 1 except that the coating composition was prepared by mixing the first polymer solution, the second polymer solution, the inorganic dispersion and solvent (acetone) in a ratio of 0.9:0.1:3:6 in (1) Example 1.

### Example 4

A separator was prepared in the same manner as in Example 1 except that the coating composition was prepared by mixing the first polymer solution, the second polymer solution, the inorganic dispersion and solvent (acetone) in a ratio of 1:1:6:9 in (1) of Example 1.

### Example 5

A separator was prepared in the same manner as in Example 1 except that the prepared separator had a coating composition loading amount of 7 g/m² and a 4 *µ*m thick coating layer in (2) of Example 1.

### Comparative Example 1

A separator was prepared in the same manner as in Example 1 except that the coating composition was prepared without using the second polymer solution by mixing the first polymer solution, the inorganic dispersion and the solvent (acetone) in a ratio of 1:1.5:3 in (1) of Example 1.

### Comparative Example 2

A separator was prepared in the same manner as in Example 1 except that a PVdF homopolymer having a weight average molecular weight of 500,000 g/mol was used in (1) of Example 1.

### Comparative Example 3

A separator was prepared in the same manner as in Example 1 except that a PVdF homopolymer having a weight average molecular weight of 700,000 g/mol was used in (1) of Example 1.

### Comparative Example 4

A separator was prepared in the same manner as in Example 1 except that a PVdF homopolymer having a weight average molecular weight of 900,000 g/mol was used in (1) of Example 1.

### Experimental Example 1

### Measurement of thermal shrinkage of separator

Each of the separators prepared in Examples 1 to 5 and Comparative Examples 1 to 4 was cut into 5 cm width x 5 cm length pieces to prepare a total of 9 specimens. Each of the specimens was left in a chamber at 150°C for 1 hour, followed by measuring degrees of shrinkage of each specimen in MD and TD directions to calculate thermal shrinkage.

Measurement results of thermal shrinkage are shown in Table 1.

### Experimental Example 2

### Measurement of peel strength between coating layer and base film

Each of the coating layers prepared in Examples 1 to 5 and Comparative Examples 1 to 4 was cut into 1.5 cm × 7 cm pieces to prepare a total of 9 specimens. Each specimen was strongly attached to a glass plate using a transparent double-sided tape (3M), followed by measuring force for separating the coating layer using a tensile strength tester (UTM; Universal Test Machine).

Measurement results of peel strength are shown in Table 1.

### Experimental Example 3

### Measurement of adhesive strength between coating layer and electrode

Each of the separators prepared in Examples 1 to 5 and Comparative Examples 1 to 4 was placed and bonded between both electrodes to prepare a battery stack of positive electrode/separator/negative electrode, which in turn was inserted into an aluminum pouch. Then, with an electrolyte injected into the aluminum pouch, the aluminum pouch was sealed and formed into three single-plate cells, which in turn were subjected to a force of 100 kgf/cm² at 50°C for 20 seconds and then left for 12 hours. Next, after disassembling each of the single-plate cells, the battery stack of the positive electrode, the separator and the negative electrode bonded to each other was cut into a size of 1.5 cm (MD) × 7 cm (TD) and attached to a glass plate using a transparent double-sided tape (3M), followed by measuring adhesive strength between the coating layer and the electrodes of the separator using a tensile strength tester (UTM; Universal Test Machine). The positive electrode was a lithium cobalt oxide (LCO) electrode, and the negative electrode was a crystalline carbon electrode.

Measurement results of adhesive strength are shown in Table 1.

**Table 1**

| Samples | Thermal shrinkage of separator (%) | Peel strength between coating layer and base film (gf/cm²) | Adhesive strength between coating layer and electrode (gf/cm²) |
|---|---|---|---|
| Example 1 | 15 | 100 | 42 |
| Example 2 | 18 | 90 | 37 |
| Example 3 | 25 | 65 | 25 |
| Example 4 | 10 | 80 | 28 |
| Example 5 | 20 | 90 | 35 |
| Comparative Example 1 | 30 | 10 | 5 |
| Comparative Example 2 | 28 | 20 | 8 |
| Comparative Example 3 | 25 | 35 | 13 |
| Comparative Example 4 | 25 | 45 | 17 |

As shown in Table 1, it can be seen that the separators prepared in Examples 1 to 5 using the PVdF-HFP copolymer having a weight average molecular weight of 700,000 g/mol and the PVdF homopolymer having a weight average molecular weight of 1,100,000 g/mol demonstrated better results in terms of all of the test items, such as thermal shrinkage, peel strength, and adhesive strength, than the separators prepared in Comparative Examples 1 to 4 wherein the PVdF-HFP copolymer and the PVdF homopolymer having a molecular weight of less than 1,000,000 g/mol were used.

In particular, according to the fact that the peel strength between the coating layer and the base film gradually increased with increasing weight average molecular weight of the PVdF homopolymer and abruptly increased by about 2.2 times when the PVdF homopolymers having weight average molecular weights of 900,000 g/mol and 1,100,000 g/mol were used, it was considered that the use of a PVdF homopolymer having a weight average molecular weight of about 1,000,000 g/mol or more could provide sufficiently high peel strength. Further, the adhesive strength between the coating layer and electrodes also exhibited a similar tendency to the peel strength.

Meanwhile, comparing the test results of Examples 1 to 5, it can be seen that the thermal shrinkage of the separator was adjustable according to the ratio of the respective components used in preparation of the coating composition, that is, the ratio of the PVdF-HFP copolymer, PVdF homopolymer, inorganic particles and solvent, and that the peel strength between the coating layer and the separator and the adhesive strength between the coating layer and the electrodes were also adjustable according to the ratio of the respective components in the coating composition.

## Claims

1. A porous separator including a porous base film and a coating layer, the coating layer being formed on a surface of the porous base film and containing a polyvinylidene fluoride homopolymer, a polyvinylidene fluoride-hexafluoropropylene copolymer and inorganic particles, **characterized in that**,
wherein the porous base film is a polyolefin film;
wherein the polyvinylidene fluoride homopolymer has a weight average molecular weight of 1,000,000 g/mol or more; and
wherein polyvinylidene fluoride-hexafluoropropylene copolymer has a weight average molecular weight of 800,000 g/mol or less.
wherein the separator has,
a) a thermal shrinkage of 30% or less in a machine direction (MD) or in a transverse direction (TD), as measured after leaving the separator at 150°C for 1 hour, 2 2
b) a peel strength of 0,49 N/cm (50 gf/cm²) or more between the coating layer and the base film,
and
c) an adhesive strength of 0.20 N/cm (20 gf/cm²) or more between the coating layer and the electrodes of the battery.

2. The porous separator according to claim 1, wherein the polyolefin film is one selected from the group consisting of a polyethylene monolayer film, a polypropylene monolayer film, a polyethylene/polypropylene bilayer film, a polypropylene/ polyethylene/ polypropylene triple-layer film, and a polyethylene/polypropylene/polyethylene triple-layer film.

3. The porous separator according to claim 1 or 2, wherein the battery is a lithium ion rechargeable battery.

4. The porous separator according to claims 1 to 3, wherein the electrodes comprises an positive electrode and a negative electrode, the positive electrode being selected from the group consisting of lithium cobalt oxide, lithium nickel cobalt manganese oxide, lithium manganese oxide, lithium iron phosphate and lithium nickel oxide electrodes, the negative electrode being a crystalline or amorphous carbon electrode.

5. The porous separator according to claims 1 to 4, wherein the polyvinylidene fluoride homopolymer has a weight average molecular weight ranging from 1,000,000 g/mol to 1,200,000 g/mol.

6. The porous separator according to claims 1 to 5, comprising: 5 to 10 parts by weight of the polyvinylidene fluoride homopolymer; 5 to 20 parts by weight of the polyvinylidene fluoride-hexafluoropropylene copolymer; and 70 to 90 parts by weight of the inorganic particles, based on 100 parts by weight of the coating layer in terms of solid content.

7. The porous separator according to claims 1 to 6, wherein the inorganic particles comprise alumina (Al₂O₃) particles.

8. The porous separator according to claims 1 to 7, wherein the coating layer of the organic and inorganic mixture has a thickness ranging from 0.01 *µ*m to 20 *µ*m.

9. An electrochemical battery comprising a positive electrode, a negative electrode, an electrolyte, and the separator according to any one of claims 1 to 8.

10. The electrochemical battery according to claim 9, wherein the electrochemical battery is a lithium rechargeable battery.

## Patentansprüche

1. Poröser Separator mit einer porösen Grundfolie und einer Beschichtungsschicht, wobei die Beschichtungsschicht auf einer Oberfläche der porösen Grundfolie ausgebildet ist und ein Polyvinylidenfluorid-Homopolymer, ein Polyvinylidenfluorid-Hexafluorpropylen-Copolymer und anorganische Teilchen enthält, **dadurch gekennzeichnet, dass** es sich bei der porösen Grundfolie um eine Polyolefinfolie handelt;
das Polyvinylidenfluorid-Homopolymer ein gewichtsmittleres Molekulargewicht von 1.000.000 g/mol oder mehr aufweist und
das Polyvinylidenfluorid-Hexafluorpropylen-Copolymer ein gewichtsmittleres Molekulargewicht von 800.000 g/mol oder mehr aufweist,
wobei der Separator
a) einen Wärmeschrumpf von 30% oder weniger in Maschinenrichtung (MD) oder in Querrichtung (TD), wie nach 1 Stunde Belassen des Separators bei 150°C gemessen,
b) eine Abziehfestigkeit von 0,49 N/cm² (50 gf/cm²) oder mehr zwischen der Beschichtungsschicht und
der Grundfolie und
c) eine Haftfestigkeit von 0,20 N/cm² (20 gf/cm²) oder mehr zwischen der Beschichtungsschicht und den Elektroden der Batterie
aufweist.

2. Poröser Separator nach Anspruch 1, wobei es sich bei der Polyolefinfolie um eine aus der Gruppe bestehend aus einer einschichtigen Polyethylenfolie, einer einschichtigen Polypropylenfolie, einer zweischichtigen Polyethylen/PolypropylenFolie, einer dreischichtigen Polypropylen/Polyethylen/Polypropylen-Folie und einer dreischichtigen Polyethylen/Polypropylen/Polyethylen-Folie handelt.

3. Poröser Separator nach Anspruch 1 oder 2, wobei es sich bei der Batterie um eine wiederaufladbare Lithiumionenbatterie handelt.

4. Poröser Separator nach den Ansprüchen 1 bis 3, wobei die Elektroden eine positive Elektrode und eine negative Elektrode umfassen, wobei die positive Elektrode aus der Gruppe bestehend aus Lithiumcobaltoxid-, Lithiumnickelcobaltmanganoxid-, Lithiummanganoxid-, Lithiumeisenphosphat- und Lithiumnickeloxid-Elektroden ausgewählt ist und es sich bei der negativen Elektrode um eine Elektrode aus kristallinem oder amorphem Kohlenstoff handelt.

5. Poröser Separator nach den Ansprüchen 1 bis 4, wobei das Polyvinylidenfluorid-Homopolymer ein gewichtsmittleres Molekulargewicht im Bereich von 1.000.000 g/mol bis 1.200.000 g/mol aufweist.

6. Poröser Separator nach den Ansprüchen 1 bis 5, umfassend: 5 bis 10 Gewichtsteile des Polyvinylidenfluorid-Homopolymers; 5 bis 20 Gewichtsteile des Polyvinylidenfluorid-Hexafluorpropylen-Copolymers und 70 bis 90 Gewichtsteile der anorganischen Teilchen, bezogen auf 100 Gewichtsteile der Beschichtungsschicht hinsichtlich Feststoffgehalt.

7. Poröser Separator nach den Ansprüchen 1 bis 6, wobei die anorganischen Teilchen Aluminiumoxid-(Al₂O₃) -Teilchen umfassen.

8. Poröser Separator nach den Ansprüchen 1 bis 7, wobei die Beschichtungsschicht aus der organischen und anorganischen Mischung eine Dicke im Bereich von 0,01 µm bis 20 µm aufweist.

9. Elektrochemische Batterie mit einer positiven Elektrode, einer negativen Elektrode, einem Elektrolyt und dem Separator nach einem der Ansprüche 1 bis 8.

10. Elektrochemische Batterie nach Anspruch 9, wobei es sich bei der elektrochemischen Batterie um eine wiederaufladbare Lithiumbatterie handelt.

## Revendications

1. Séparateur poreux comportant un film de base poreux et une couche de revêtement, la couche de revêtement étant formée sur une surface du film de base poreux et contenant un homopolymère de polyfluorure de vinylidène, un copolymère polyfluorure de vinylidènehexafluoropropylène et des particules inorganiques, **caractérisé en ce que**
le film de base poreux étant un film de polyoléfine ;
l'homopolymère de polyfluorure de vinylidène ayant un poids moléculaire moyen en poids de 1 000 000 g/mol ou plus ; et
le copolymère polyfluorure de vinylidène-hexafluoropropylène ayant un poids moléculaire moyen en poids de 800 000 g/mol ou moins,
le séparateur ayant
a) un retrait thermique de 30 % ou moins dans un sens machine (MD) ou dans un sens travers (TD), tel que mesuré après avoir laissé le séparateur à 150 °C pendant 1 heure,
b) une résistance au décollement de 0,49 N/cm² (50 gf/cm²) ou plus entre la couche de revêtement et le film de base, et
c) une résistance d'adhérence de 0,20 N/cm² (20 gf/cm²) ou plus entre la couche de revêtement et les électrodes de la batterie.

2. Séparateur poreux selon la revendication 1, le film de polyoléfine étant un film choisi dans le groupe constitué par un film monocouche de polyéthylène, un film monocouche de polypropylène, un film bicouche de polyéthylène/polypropylène, un film tricouche de polypropylène/polyéthylène/polypropylène, et un film tricouche de polyéthylène/polypropylène/polyéthylène.

3. Séparateur poreux selon la revendication 1 ou 2, la batterie étant une batterie rechargeable au lithium-ion.

4. Séparateur poreux selon les revendications 1 à 3, les électrodes comprenant une électrode positive et une électrode négative, l'électrode positive étant choisie dans le groupe constitué par les électrodes en oxyde de lithium et de cobalt, oxyde de lithium-nickel-cobalt-manganèse, oxyde de lithium et de manganèse, phosphate de lithium et de fer et oxyde de lithium et de nickel, l'électrode négative étant une électrode de carbone cristalline ou amorphe.

5. Séparateur poreux selon les revendications 1 à 4, l'homopolymère de polyfluorure de vinylidène ayant un poids moléculaire moyen en poids allant de 1 000 000 g/mol à 1 200 000 g/mol.

6. Séparateur poreux selon les revendications 1 à 5, comprenant : 5 à 10 parties en poids de l'homopolymère de polyfluorure de vinylidène ; 5 à 20 parties en poids du copolymère polyfluorure de vinylidène-hexafluoro-propylène ; et 70 à 90 parties en poids des particules inorganiques, pour 100 parties en poids de la couche de revêtement, exprimé en teneur en matières solides.

7. Séparateur poreux selon les revendications 1 à 6, les particules inorganiques comprenant des particules d'alumine (Al₂O₃).

8. Séparateur poreux selon les revendications 1 à 7, la couche de revêtement du mélange organique et inorganique ayant une épaisseur allant de 0,01 µm à 20 µm.

9. Batterie électrochimique comprenant une électrode positive, une électrode négative, un électrolyte, et le séparateur selon l'une quelconque des revendications 1 à 8.

10. Batterie électrochimique selon la revendication 9, la batterie électrochimique étant une batterie rechargeable au lithium.
